# EUROPEAN PATENT SPECIFICATION

(11) **EP 3 136 709 B1**
(45) Date of publication and mention of the grant of the patent: **17.11.2021**
(21) Application number: 16184844.5
(22) Date of filing: 19.08.2016
(51) Int. Cl.: H04N 5/232

(54) **METHOD AND SYSTEM FOR SHOOTING CONTROL OF A SMART DEVICE CAMERA**
VERFAHREN UND SYSTEM ZUR AUSLÖSUNGSSTEUERUNG DER KAMERA EINES SMARTEN GERÄTS
PROCÉDÉ ET SYSTÈME DE COMMANDE DE PRISE DE VUE DE CAMÉRA DE DISPOSITIF INTELLIGENT

(30) Priority: 31.08.2015 CN 201510549190
(43) Date of publication of application: 01.03.2017
(73) Proprietor: Xiaomi Inc., Beijing 100085 (CN)
(72) Inventor: GAO, Yi, Beijing, 100085 (CN); WANG, Hongqiang, Beijing, 100085 (CN); GE, Yunyuan, Beijing, 100085 (CN)
(74) Representative: Hughes, Andrea Michelle

(56) References cited:
- EP-A1- 2 894 886
- EP-A2- 2 334 050
- WO-A1-2013/123489
- WO-A1-2015/088377
- US-A1- 2010 052 843
- US-A1- 2015 163 534

## Description

### TECHNICAL FIELD

The present disclosure generally relates to the field of terminal technology, and more particularly, to a method and a device for camera shooting control.

### BACKGROUND

With rapid development of technology, more and more smart devices such as smart phones, smart watches and smart glasses are available in daily lives. Generally, these smart devices are provided with camera function such that a user may take photos or videos by manually controlling the smart devices. For example, the user may turn on the camera and capture image information by clicking a camera icon or a predetermined physical button. After that, if intending to take photos, the user may take photos by clicking a photo icon or a physical button representing taking photos, and if intending to take videos, the user may start taking videos by clicking a video icon or a physical button representing taking videos and stop taking videos by clicking the video icon or the physical button representing taking videos once more.

EP 2334050 A2 relates to remotely controlling a camera. EP 2894886 A1 relates to a system and method for providing device use information. WO 2013/123489 relates to the remote operation of video equipment. US 2010/0052843 A1 relates to portable electronic devices.

### SUMMARY

Accordingly, the present invention provides a method and a system for shooting control, in accordance with the appended claims.

According to a first aspect of embodiments of the present disclosure, there is provided a method for shooting control as defined by claim 1.

According to a second aspect of embodiments of the present disclosure, there is provided a method for shooting control as defined by claim 4.

According to a third aspect of embodiments of the present disclosure, there is provided a system for shooting control comprising a first device and a second device, according to claim 5.

According to a fourth aspect of embodiments of the present disclosure, there is provided a system comprising a first device and a second device, as claimed in claim 8.

The technical scheme according to embodiments of the present disclosure may have the following beneficial effects:

According to the present disclosure, the first device may transmit the image capturing instruction to the second device, and receive the real time dynamic image information captured by the camera and transmitted from the second device according to the image capturing instruction. The first device may generate the target file according to the shooting instruction input by the user and the real time dynamic image information, such that the image captured by the second device may be shot when it is inconvenient for the user to control the second device.

The shooting instruction provided by the present disclosure includes the photo taking instruction, and the first device may take the photo captured by the second device according to the photo taking instruction.

The shooting instruction provided by the present disclosure includes the video taking instruction, and the first device may record the video captured by the second device according to the video taking instruction.

The first device according to the present disclosure may also transmit the shooting instruction to the second device, and the second device may generate the target file according to the shooting instruction and the real time dynamic image information captured by the camera, such that the second device may be controlled to shoot the captured image when it is inconvenient for the user to control the second device.

The second device according to the present disclosure may turn on the camera after receiving the image capturing instruction transmitted from the first device, and transmit the real time dynamic image information captured by the camera to the first device, such that the first device may generate the target file according to the shooting instruction input by the user and the real time dynamic image information, thereby shooting the image captured by the second device when it is inconvenient for the user to control the second device.

The second device according to the present disclosure may, after receiving the image capturing instruction transmitted by the first device, control a display status of the screen to remain in that before receiving the image capturing instruction, thereby preventing other users from being aware of the shooting action and protecting the user's privacy.

The second device according to the present disclosure may also receive the shooting instruction transmitted by the first device, and generate the target file according to the shooting instruction and the real time dynamic image information captured by the camera, such that the second device may be controlled to shoot the captured image when it is inconvenient for the user to control the second device.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart illustrating a method for shooting control according to an exemplary embodiment.
Fig. 2 is a flow chart illustrating another method for shooting control according to an exemplary embodiment.
Fig. 3 is a schematic diagram illustrating an application scenario according to an exemplary embodiment.
Fig. 4 is a flow chart illustrating another method for shooting control according to an exemplary embodiment.
Fig. 5 is a schematic diagram illustrating an interface according to an exemplary embodiment.
Fig. 6 is a block diagram illustrating a device for shooting control according to an exemplary embodiment.
Fig. 7 is a block diagram illustrating another device for shooting control according to an exemplary embodiment.
Fig. 8 is a block diagram illustrating another device for shooting control according to an exemplary embodiment.
Figs. 9a and 9b are block diagrams illustrating another device for shooting control according to an exemplary embodiment.
Fig. 10 is a block diagram illustrating another device for shooting control according to an exemplary embodiment.
Fig. 11 is a block diagram illustrating another device for shooting control according to an exemplary embodiment.
Fig. 12 is a block diagram illustrating another device for shooting control according to an exemplary embodiment.
Fig. 13 is a block diagram illustrating another device for shooting control according to an exemplary embodiment.
Fig. 14 is a block diagram illustrating another device for shooting control according to an exemplary embodiment.
Fig. 15 is a structural schematic diagram illustrating a device for shooting control according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

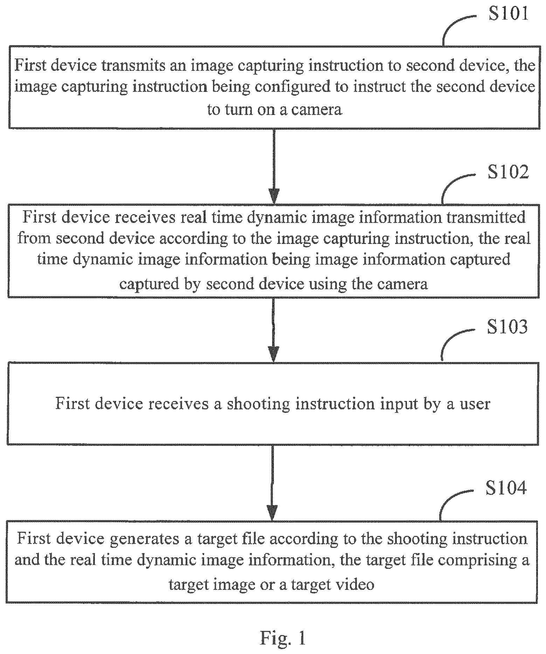

Fig. 1 is the flow chart of a method for shooting control, according to an exemplary embodiment.

Referring to Fig. 1, the method for shooting control is applicable in a first device, which may include a smart terminal device such as a smart phone, a tablet, a PDA (Personal Digital Assistant), an e-book reader, a multimedia player and the like. The method for shooting control may include the following steps.

In step S101, the first device transmits an image capturing instruction to the second device.

In the present embodiment, the second device may include a smart terminal device having a built-in camera such as a smart phone, a tablet, a PDA (Personal Digital Assistant), an e-book reader, a multimedia player and the like. The image capturing instruction is configured to instruct the second device to turn on the camera.

In step S102, the first device receives real time dynamic image information transmitted from the second device according to the image capturing instruction.

In the present embodiment, the real time dynamic image information is image information captured by the second device using the camera

In step S103, the first device receives a shooting instruction input by the user.

In the present embodiment, after receiving the real time dynamic image information, the first device may receive the shooting instruction input by the user including a video taking instruction and a photo taking instruction. The user may input the shooting instruction by clicking a predetermined button, or may input the shooting instruction by voice control, which is not limited in the present disclosure.

In step S104, the first device generates according to the shooting instruction and the real time dynamic image information a target file that includes a target image or a target video.

Based on the above step S103, at the time when the first device receives the shooting instruction, the target file may be generated according to the shooting instruction and the real time dynamic image information, and the target file may be stored locally. Herein, when the shooting instruction is the photo taking instruction, the first device captures a current image indicated by the real time dynamic image information at the time when the first device receives the photo taking instruction, generates the target image according to the captured current image, and stores the target image locally. When the shooting instruction is the video taking instruction, the first device configures a time receiving the video taking instruction as a start time and a time receiving a stop shooting instruction as a stop time, continuously captures the real time dynamic image information from the start time until the stop time, generates the target video according to the images indicated by the continuously captured real time dynamic image information, and stores the generated target video locally. The shooting instruction provided in the present embodiment includes the photo taking instruction and the video taking instruction, and the first device may shoot the image captured by the second device or record the video captured by the second device according to the shooting instruction.

As can be seen from the above description, the first device of the present disclosure may transmit the image capturing instruction to the second device, and receive the real time dynamic image information captured by the camera and transmitted from the second device according to the image capturing instruction. The first device may generate the target file according to the shooting instruction input by the user and the real time dynamic image information, such that the image captured by the second device may be shot when it is inconvenient for the user to control the second device.

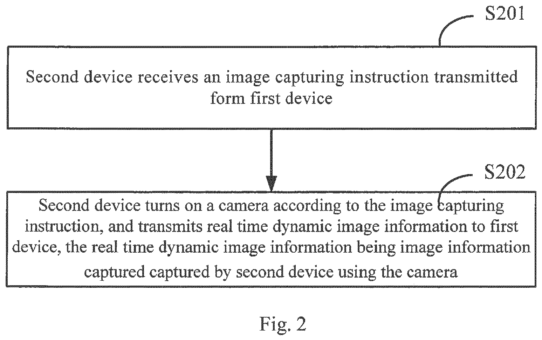

Fig. 2 is a flow chart illustrating another method for shooting control according to an exemplary embodiment of the present disclosure.

Referring to Fig. 2, the method for shooting control is applicable in a second device, and includes the following steps.

In step S201, the second device receives an image capturing instruction transmitted from a first device.

In step S202, the second device turns on a camera according to the image capturing instruction, and transmits real time real time dynamic image information to the first device. Therein, the real time dynamic image information is image information captured by the second device using the camera.

Based on the above step S201, after receiving the image capturing instruction, the second device may turn on the camera according to the image capturing instruction so as to capture image information, and transmit the real time dynamic image information to the first device.

After receiving the real time dynamic image information, the first device may display the real time dynamic image information, and if the shooting image input by the user is received, the first device may generate the target file according to the shooting instruction and the real time dynamic image information and stores the same locally in the first device.

As can be seen from the above description, after receiving the image capturing instruction transmitted from the first device, the second device according to the present disclosure may turn on the camera and transmit real time dynamic image information captured by the camera to the first device, such that the first device may generate the target file according to the shooting instruction input by the user and the real time dynamic image information, thereby shooting the image captured by the second device when it is inconvenient for the user to control the second device.

In another embodiment of the present disclosure, the first device may previously establish a wireless connection with the second device, such as a Bluetooth connection, an IR (infrared) connection, a Wi-Fi connection and the like. The first device may transmit a control request to the second device via the wireless connection, and if the first device receives an accept instruction fed back from the second device with respect to the control request, the first device may add an identification of the second device into a device table.

After receiving a table display instruction input by the user, the first device may display the device table to the user. For example, the first device may display the identifiers of all the second devices in the device table to the user, and mark the current connection status of the second device for each of the second device in the device table. The first device may also display the identifiers of the second device having a connected connection status in the device table to the user, which is not limited in the present disclosure. The first device receives a selection instruction input by the user in the device table, and then transmits the image capturing instruction to the second device indicated by the selection instruction. After receiving the image capturing instruction, the second device may turn on the camera and capture image information.

After turning on the camera, the second device transmits the captured real time dynamic image information to the first device, and if the first device is integrated with a display screen, the first device may display the received real time dynamic image information with the display screen. Of cause, in the actual application, if the first device is not provided with any display screen, the first device may also display the real time dynamic image information with a plug-in display screen, or the first device may not display the real time dynamic image information, which is not limited in the present disclosure.

Alternatively, in another embodiment of the present disclosure, after receiving the shooting instruction input by the user, the first device may transmit the shooting instruction to the second device, and the second device generates the target file according to the shooting instruction and the real time dynamic image information captured by the camera. Herein, when the shooting instruction is the photo taking instruction, the second device may capture the current image captured by the camera at the time when the photo taking instruction is received, generate the target image according to the current image, and store the target image locally. When the shooting instruction is the video taking instruction, the second device may configure a time receiving the video taking instruction as a start time and a time receiving a stop shooting instruction as a stop time, continuously capture the real time dynamic image information from the start time until the stop time, generate the target video according to the images indicated by the continuously captured real time dynamic image information, and store the generated target video locally.

As can be seen, the first device according to the present disclosure may transmit the shooting instruction to the second device, and the second device may generate the target file according to the shooting instruction and the real time dynamic image information captured by the camera, such that the second device may be controlled to shoot the captured image when it is inconvenient for the user to control the second device.

In another embodiment of the present disclosure, when the second device is integrated with a display screen, the display status of the display screen of the second device may remain in that before receiving the image capturing instruction. Herein, if the display screen of the second device is in a screen-off status before receiving the image capturing instruction, the display screen is controlled to remain in the screen-off status after the second device receives the image capturing instruction. If the display screen of the second device is not in a screen-off status before receiving the image capturing instruction, the display screen is controlled to remain in the previous status after the second device receives the image capturing instruction, that is, instead of displaying the image information captured by the camera, displaying an image that was displayed before receiving the image capturing instruction.

As can be seen, after receiving the image capturing instruction transmitted from the first device, the second device according to the present disclosure may control the display screen to retain the display status as before receiving the image capturing instruction, thereby preventing other users from being aware of the shooting action and protecting the user's privacy.

An implementation of the present disclosure is described with reference to detailed embodiments.

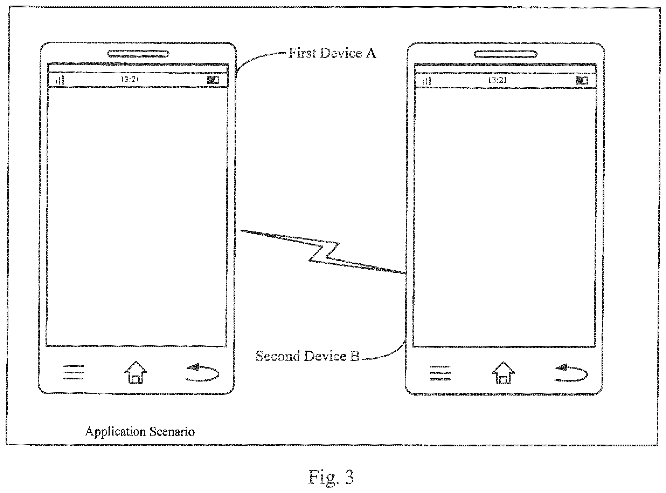

Fig. 3 is a schematic diagram illustrating an application scenario according to an exemplary embodiment.

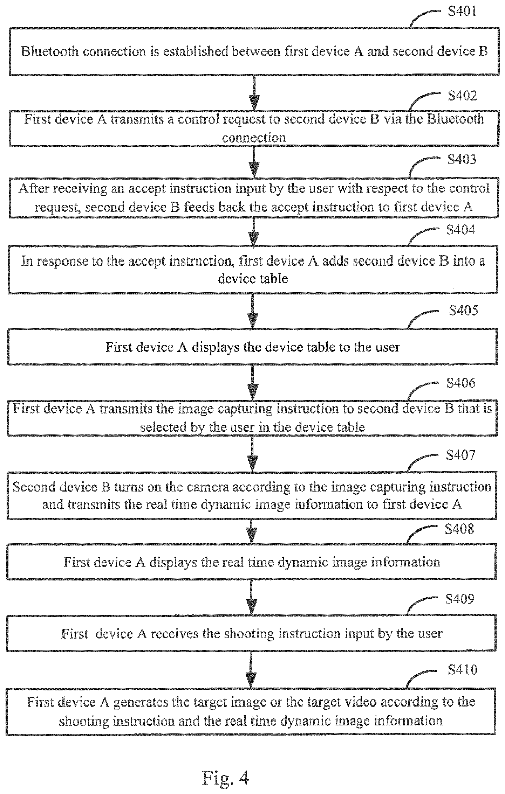

Referring to Fig. 3, the application scenario of the method for shooting control according to the exemplary embodiment includes a first device A and a second device B, wherein the second device B is integrated with a camera. Referring to Fig. 4, the method for shooting control may include the steps as follow.

In step S401, a Bluetooth connection is established between the first device A and the second device B.

In step S402, the first device A transmits a control request to the second device B via the Bluetooth connection.

In the present embodiment, when the user needs to control the second device B with the first device A, the first device A transmits a control request to the second device B via the Bluetooth connection.

In step S403, after receiving an accept instruction input by the user with respect to the control request, the second device B feeds back the accept instruction to the first device A.

In the present embodiment, after receiving the control request, the second device B may prompt the control request to the user for confirmation. If the user accepts the control request, the user may input the accept instruction in the second device B; and if the user does not accept the control request, the user may input a refuse instruction in the second device B.

After receiving the accept instruction, the second device B may feed back the accept instruction to the first device A. After receiving the refuse instruction, the second device B may feed back the refuse instruction to the first device A.

In step S404, in response to the accept instruction, the first device A adds the second device B into a device table.

In the present embodiment, after receiving the accept instruction fed back from the second device B, the first device A may add an identifier of the second device B into the device table. Herein, the identifier of the second device B may be identifiers that may identify the second device B, such as a MAC address, a name and the like. The device table includes identifiers of the devices that are controllable by the first device A.

In step S405, the first device A displays the device table to the user.

In the present embodiment, the first device A may display the device table to the user after receiving a table displaying instruction input by the user.

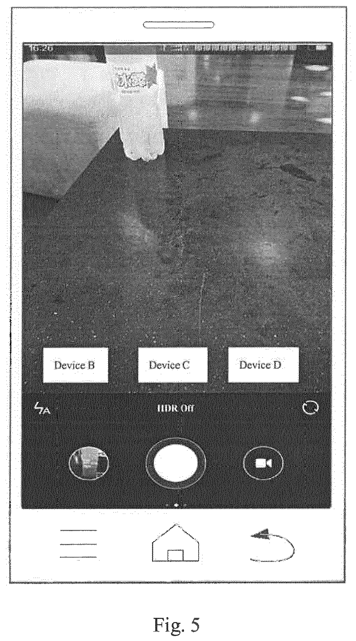

In an example, the table displaying instruction may be a camera-on instruction. Referring to the schematic diagram of the interface illustrated in Fig. 5, after the user turns on the camera of the host device, the first device A may deem that the table displaying instruction is received and display the device table to the user in a viewfinder frame. Herein, the "device B", "device C" and "device D" illustrated in Fig. 5 are identifiers of all the devices that are controllable by the first device A, and wherein the "device B" is the identifier of the second device B. Alternatively, in another example, the first device A may display, in the device table, the identifiers of devices the connection status of which is connected, and doesn't display the identifiers of devices the connection status of which is not connected.

Of cause, in an actual application, the user may also input the table displaying instruction in a related APP loaded in the first device A, such that the first device A displays the device table, which is not limited in the present disclosure.

In step S406, the first device A transmits the image capturing instruction to the second device B that is selected by the user in the device table.

Based on the above step S405, after the first device A displays the device table to the user, the user may select a device that captures the image information in the device table. When the user inputs the selection instruction with respect to a certain device identifier, the first device A transmits the image capturing instruction to the device selected by the user.

For example, referring to Fig. 5, assuming that the user clicks the "device B" in the table display interface illustrated in Fig. 5, the first device A transmits the image capturing instruction to the second device B.

In step S407, the second device B turns on the camera according to the image capturing instruction and transmits the real time dynamic image information to the first device A.

Based on the above step S406, after receiving the image capturing instruction transmitted form the first device A, the second device B turns on the camera to capture image information, and transmits the real time dynamic image information captured by the camera to the first device A.

In the step S408, the first device A displays the real time dynamic image information.

Based on the above step S407, after receiving the real time dynamic image information transmitted from the second device B, the first device A may display in the display of the host device the real time dynamic image information for the user's review.

In the step S409, the first device A receives the shooting instruction input by the user.

Based on the above step S408, after the first device displays the real time dynamic image information, the user may shoot the real time dynamic image information captured by the second device B by inputting the shooting instruction. Taking the interface illustrated in Fig. 5 for example, the user may input the shooting instruction including the photo taking instruction and the video taking instruction in the interface illustrated in Fig. 5.

In step S410, the first device A generates the target image or the target video according to the shooting instruction and the real time dynamic image information.

In the present embodiment, at the time when receiving the photo taking instruction, the first device A captures a current image indicated by the real time dynamic image information, generates the target image according to the captured current image, and stores the same locally. When the shooting instruction is the video taking instruction, the first device A configures a time receiving the video taking instruction as a start time and a time receiving a stop shooting instruction as a stop time, continuously captures the real time dynamic image information from the start time until the stop time, generates the target video according to the images indicated by the continuously captured real time dynamic image information, and stores the same locally. For example, if the time when the first device A receives the video taking instruction is 15:00:00, and the time receiving the stop shooting instruction is 15:10:00, the first device A configures the time 15:00:00 as the start time and the time 15:10:00 as the stop time, continuously captures the real time dynamic image information from 15:00:00 until 15:10:00, and generates the target video according to the images indicated by the continuously captured real time dynamic image information.

In an example, referring to Fig. 5, when the user no longer needs to receive the real time dynamic image information captured by the second device B, the user may input a stop capturing instruction. For example, the user may click once more on the identifier "device B" of the second device B illustrated in Fig. 3, the first device A transmits the stop capturing instruction to the second device B, and the second device B may turn off the camera according to the stop capturing instruction to stop capturing the image information.

Again, referring to Fig. 5, in an example, if the user needs to receive the real time dynamic image information captured by the third device C with the identifier "device C", he/she may firstly click the identifier "device B" of the second device B and then click the identifier "device C" of the third device C. The first device A will firstly transmit the stop capturing instruction to the second device B and then transmit the image capturing instruction to the third device C, and the third device C may turn on the camera according to the image capturing instruction to capture the image information. In another example, after receiving the selection instruction input by the user in the device table, the first device A may firstly judge whether the image capturing instruction has been transmitted to other devices, and if not, the first device transmits the image capturing instruction to the device selected by the user. If the image capturing instruction has been transmitted to other devices, the first device A transmits the stop capturing instruction to the device to which the image capturing instruction has been transmitted, and transmits the image capturing instruction to the device selected by the user. Accordingly, if the user needs to receive the real time dynamic image information captured by the third device C with the identifier "device C", he/she may chick the identifier "device C" of the third device C, and the first device A will transmit the stop capturing instruction to the second device B and transmit the image capturing instruction to the third device C, thereby simplifying the user's operation.

In the application scenario illustrated in Fig. 3, the first device A may perform the shooting control using the method embodiment illustrated in Fig. 1, and the second device B may perform the shooting control using the method embodiment illustrated in Fig. 2, which are not repeated herein.

Corresponding to the above embodiments of the method for shooting control, the present disclosure further provides embodiments of a device for shooting control.

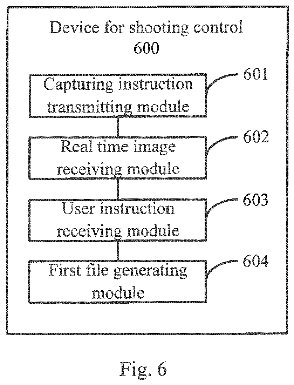

Fig. 6 is a block diagram of the device for shooting control according to an exemplary embodiment of the present disclosure.

Referring to Fig. 6, the shooting control device 600 is applicable in a first device and includes: a capturing instruction transmitting module 601, a real time image receiving module 602, a user instruction receiving module 603 and a first file generating module.

Herein, the capturing instruction transmitting module 601 is configured to transmit an image capturing instruction to a second device, and the image capturing instruction is configured to instruct the second device to turn on a camera.

The real time image receiving module 602 is configured to receive real time dynamic image information transmitted from the second device according to the image capturing instruction transmitted from the capturing instruction transmitting module 601, and the real time dynamic image information is image information captured by the second device using the camera.

The user instruction receiving module 603 is configured to receive a shooting instruction input by a user.

The first file generating module 604 is configured to generate a target file according to the shooting instruction received by the user instruction receiving module 603 and the real time dynamic image information received by the real time image receiving module 602, and the target file includes a target image or a target video.

In the above embodiment, the first device may transmit the image capturing instruction to the second device, and receive the real time dynamic image information captured by the camera and transmitted from the second device according to the image capturing instruction. The first device may generate the target file according to the shooting instruction input by the user and the real time dynamic image information, such that the image captured by the second device may be shot when it is inconvenient for the user to control the second device.

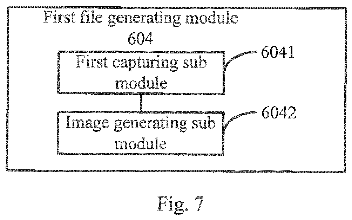

Fig. 7 is a block diagram of another device for shooting control according to an exemplary embodiment of the present disclosure.

Referring to Fig. 7, on the basis of the embodiment illustrated above in Fig. 6, the first file generation module 604 may include a first capturing sub module 6041 and an image generating sub module 6042.

The first capturing sub module 6041 is configured to capture a current image indicated by the real time dynamic image information received by the real time image receiving module 602 at the time when the user instruction receiving module 603 receives a photo taking instruction.

The image generating sub module is configured to generate the target file according to the current image captured by the first capturing sub module 6041, and the target file is the target image.

The shooting instruction provided in the above embodiment includes the photo taking instruction, and the first device may shoot the image captured by the second device according to the photo taking instruction.

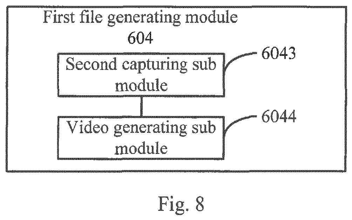

Fig. 8 is a block diagram of another device for shooting control according to an exemplary embodiment of the present disclosure.

Referring to Fig. 8, on the basis of the embodiment illustrated above in Fig. 6, the first file generation module 604 may include a second capturing sub module 6043 and a video generating sub module 6044.

The second capturing sub module 6043 is configured to configure, according to a video taking instruction received by the user instruction receiving module 603, a time receiving the video taking instruction as a start time and a time receiving a stop shooting instruction as a stop time, and continuously capture the real time dynamic image information from the start time till the stop time.

The video generating sub module 6044 is configured to generate the target file according to images indicated by the real time dynamic image information continuously captured by the second capturing sub module 6043, and the target file is the target video.

The shooting instruction provided in the above embodiment includes the video taking instruction, and the first device may record the video captured by the second device according to the video taking instruction.

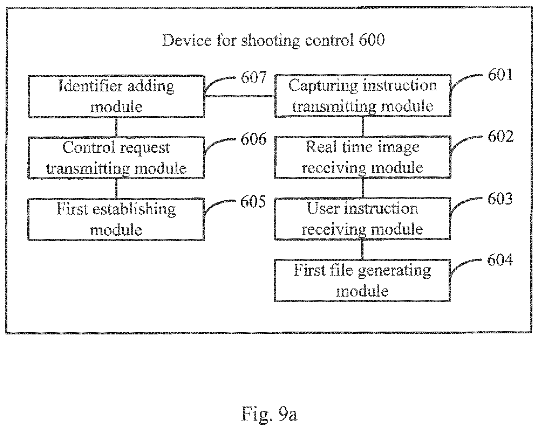

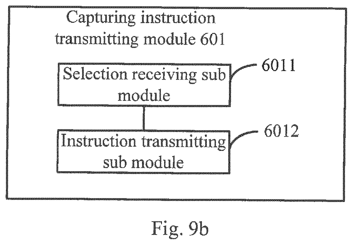

Figs. 9a and 9b are block diagrams of another device for shooting control according to an exemplary embodiment of the present disclosure.

Referring to Figs. 9a and 9b, on the basis of the embodiment illustrated above in Fig. 6, the device for shooting control 600 may further include a first establishing module 605, a control request transmitting module 606 and an identifier adding module 607, and the capturing instruction transmitting module 601 may further include a selection receiving sub module 6011 and an instruction transmitting sub module 6012.

Herein, the first establishing module 605 is configured to establish a wireless connection with the second device.

The control request transmitting module 606 is configured to transmit a control request to the second device via the wireless connection established by the first establishing module 605.

The identifier adding module 607 is configured to add an identifier of the second device into a device table if it is received an accept instruction fed back from the second device with respect to the control request transmitted by the control request transmitting module 606.

The selection receiving sub module 6011 is configured to receive a selection instruction that is input by the user in the device table into which the identifier adding module 607 adds.

The instruction transmitting sub module 6012 is configured to transmit the image capturing instruction to the second device indicated by the selection instruction received by the selection receiving sub module 6011.

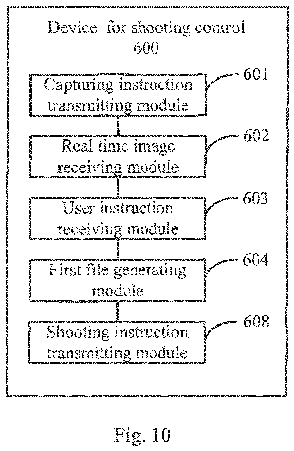

Fig. 10 is a block diagram of another device for shooting control according to another exemplary embodiment of the present disclosure.

Referring to Fig. 10, on the basis of the embodiment illustrated above in Fig. 6, the device for shooting control 600 may further include a shooting instruction transmitting module 608.

The shooting instruction transmitting module 608 is configured to transmit the shooting instruction received by the user instruction receiving module to the second device, the shooting instruction is configured to instruct the second device to generate the target file according to the real time dynamic image information captured by the camera, and the target file includes the target image or the target video.

In the above embodiment, the first device may also transmit the shooting instruction to the second device, and the second device may generate the target file according to the shooting instruction and the real time dynamic image information captured by the camera, such that the second device may be controlled to shoot the captured image when it is inconvenient for the user to control the second device.

The devices illustrated in Figs 6 to 10 are configured to execute the method procedures illustrated above in Fig. 1 or Fig. 4. With respect to the devices in the above embodiments, the specific manners for performing operations for individual modules therein have been described in detail in the embodiments regarding the methods, which will not be elaborated herein.

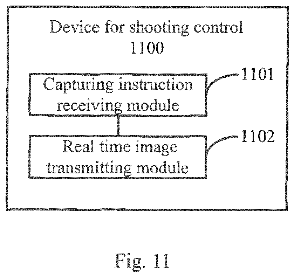

Fig. 11 is a block diagram of another device for shooting control according to an exemplary embodiment.

Referring to Fig. 11, the device for shooting control 1100 is applicable in a second device and includes a capturing instruction receiving module 1101 and a real time image transmitting module 1102.

Herein, the capturing instruction receiving module 1101 is configured to receive an image capturing instruction transmitted from a first device.

The real time image transmitting module 1102 is configured to turn on a camera according to the image capturing instruction received by the capturing instruction receiving module 1101, and transmit real time dynamic image information to the first device, wherein the real time dynamic image information is image information captured by the second device using the camera.

In the above embodiment, the second device may turn on the camera after receiving the image capturing instruction transmitted from the first device, and transmit the real time dynamic image information captured by the camera to the first device, such that the first device may generate the target file according to the shooting instruction input by the user and the real time dynamic image information, thereby shooting the image captured by the second device when it is inconvenient for the user to control the second device.

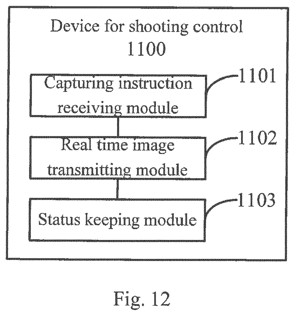

Fig. 12 is a block diagram of another device for shooting control according to an exemplary embodiment of the present disclosure.

Referring to Fig. 12, on the basis of the embodiment illustrated above in Fig. 11, the device for shooting control 1100 may further include a status keeping module 1103.

The status keeping module 1103 is configured to keep a display status of a display screen of the second device in that before receiving the image capturing instruction, when the image capturing instruction received by the capturing instruction receiving module 1101 is received.

In the above embodiment, after receiving the image capturing instruction transmitted by the first device, the second device may control the screen to remain in a display state before receiving the image capturing instruction, thereby preventing other users from being aware of the shooting action and protecting the user's privacy.

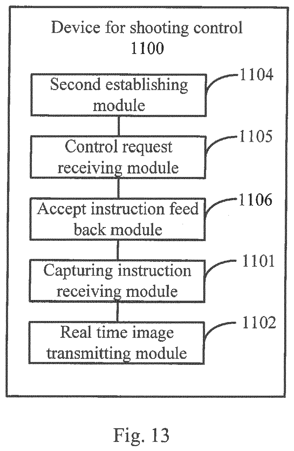

Fig. 13 is a block diagram of another device for shooting control according to an exemplary embodiment of the present disclosure.

Referring to Fig. 13, on the basis of the embodiment illustrated above in Fig. 11, the device for shooting control 1100 may further include a second establishing module 1104, a control request receiving module 1105 and an accept instruction feed back module 1106.

The second establishing module 1104 is configured to establish a wireless connection with the first device.

The control request receiving module 1105 is configured to receive a control request transmitted from the first device via the wireless connection established by the second establishing module 1104.

The accept instruction feed back module 1106 is configured to, if it is received an accept instruction input by a user with respect to the control request received by the control request receiving module 1105, feed back the accept instruction to the first device, wherein the accept instruction is configured to instruct the first device to add an identifier of the second device into a device table.

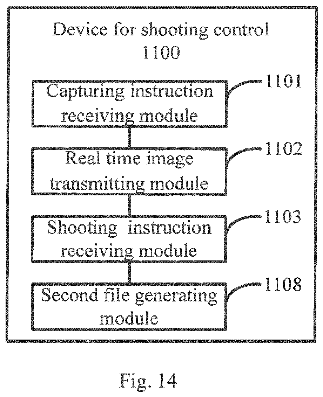

Fig. 14 is a block diagram of another device for shooting control according to an exemplary embodiment of the present disclosure.

Referring to Fig. 14, on the basis of the embodiment illustrated above in Fig. 11, the device for shooting control 1100 may further include a shooting instruction receiving module 1107 and a second file generating module 1108.

The shooting instruction receiving module 1107 is configured to receive a shooting instruction transmitted from the first device.

The second file generating module 1108 is configured to generate a target file according to the shooting instruction received by the shooting instruction receiving module 1107 and the real time dynamic image information captured by the camera, and the target file is a target image or a target video.

In the above embodiment, the second device may also receive the shooting instruction transmitted by the first device, and generate the target file according to the shooting instruction and the real time dynamic image information captured by the camera, such that the second device may be controlled to shoot the captured image when it is inconvenient for the user to control the second device.

The devices illustrated in Figs 11 to 14 are configured to execute the method procedures illustrated above in Fig. 2 or Fig. 4. With respect to the devices in the above embodiments, the specific manners for performing operations for individual modules therein have been described in detail in the embodiments regarding the methods, which will not be elaborated herein.

With respect to the devices in the above embodiments, the specific manners for performing operations for individual modules therein have been described in detail in the embodiments regarding the methods, which will not be elaborated herein.

For the embodiments of the device, relevant part may be made reference to descriptions on the embodiments of the method due to their correspondence with each other.

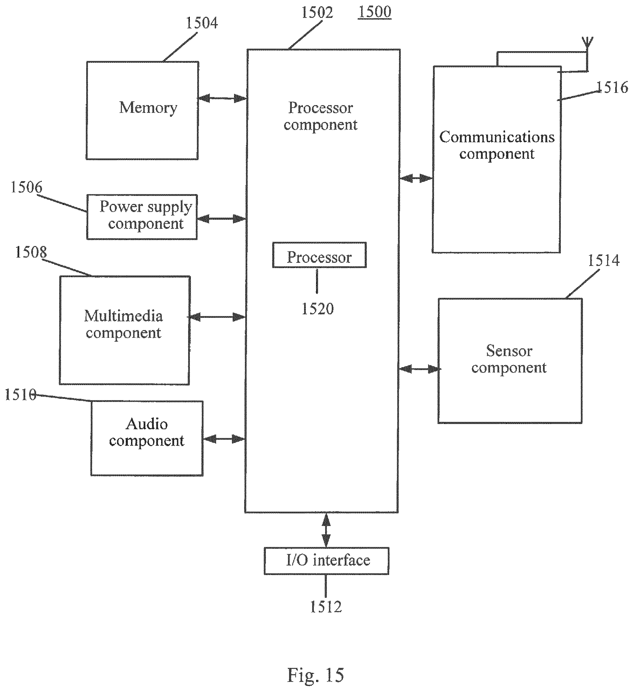

Fig. 15 is a block diagram of a device for shooting control 1500, according to an exemplary embodiment. For example, the device 1500 may be a mobile phone, a computer, a digital broadcast terminal, a messaging device, a gaming console, a tablet, a medical device, exercise equipment, a personal digital assistant, and the like.

Referring to Fig. 15, Referring to Fig. 8, the device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front camera and/or a rear camera. The front camera and the rear camera may receive an external multimedia datum while the device 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 includes a microphone ("MIC") configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the device 1500 and other devices. The device 1500 can access a wireless network based on a communication standard, such as WiFi, 2G, or 3G, or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1504, executable by the processor 1520 in the device 1500, for performing the above-described methods. For example, the non-transitory computer-readable storage medium may be a ROM, a RAM, a CD-ROM, a magnetic tape, a floppy disc, an optical data storage device, and the like.

## Claims

1. A method for shooting control, comprising:
establishing (S401) a wireless connnection between a first device (A) and a second device (B), the second device being a smart device including a camera;
transmitting (S402) via the wireless connection, from the first device to the second device, a request to control the second device with the first device; and
if an accept instruction fed back from the second device with respect to the control request is received, adding (S404) an identifier of the second device into a device table on the first device,
transmitting (S406), from the first device to the second device, an image capturing instruction that is configured to instruct the second device to turn on the camera (S407), the second device being controlled to keep a display status of a display screen of the second device as it was before receiving the image capturing instruction; the transmitting from the first device to the second device an image capturing instruction further comprising:
receiving, by the first device, a selection instruction input in the device table by a user; and
transmitting, from the first device, the image capturing instruction to the second device indicated by the selection instruction.
receiving, by the first device, real time dynamic image information transmitted from the second device according to the image capturing instruction, the real time dynamic image information defining an image captured by the camera;
receiving (S409), by the first device, a shooting instruction input by the user; and
generating (S410), by the first device, a target file according to the shooting instruction and the real time dynamic image information, the target file comprising a target image or a target video.

2. The method for shooting control according to claim 1, wherein,
when the shooting instruction is a photo taking instruction, the generating, by the first device, a target file according to the shooting instruction and the real time dynamic image information comprises:
capturing a current image indicated by the real time dynamic image information at the time when the first device receives the photo taking instruction; and
generating the target file according to the captured current image, the target file being the target image.

3. The method for shooting control according to claim 1, wherein,
when the shooting instruction is a video taking instruction, the generating, by the first device, a target file according to the shooting instruction and the real time dynamic image information comprises:
configuring, by the first device, a time receiving the video taking instruction as a start time and a time receiving a stop shooting instruction as a stop time, and continuously capturing the real time dynamic image information from the start time until the stop time; and
generating the target file according to images indicated by the continuously captured real time dynamic image information, the target file being the target video.

4. A method for shooting control, comprising:
establishing a wireless connection between a second device and a first device, the second device being a smart device including a camera;
receiving via the wireless connection, by the second device, a request to control the second device with the first device transmitted from the first device; and
if an accept instruction input by a user with respect to the control request is received, feeding back the accept instruction to the first device, the accept instruction being configured to instruct the first device to add an identifier of the second device into a device table to the first device;
receiving (S201), by the second device, an image capturing instruction transmitted from the first device;
turning on (S202) the camera according to the image capturing instruction, and transmitting real time dynamic image information to the first device, by the second device, the real time dynamic image information being image information captured by the second device using the camera; and further comprising:
generating, by the second device, a target file according to the shooting instruction and the real time dynamic image information captured by the camera, the target file being a target image or a target video; and
when the image capturing instruction is received by the second device, keeping a display status of a display screen of the second device as it was before receiving the image capturing instruction.

5. A system comprising a device for shooting control comprising a first device and a second device, wherein the first device comprises:
a capturing instruction transmitting module (601), configured to transmit an image capturing instruction to the second device, the image capturing instruction being configured to instruct the second device to turn on a camera, the second device being controlled to keep a display status of a display screen thereof as it was before receiving the image capturing instruction, the second device being a smart device including the camera;
a real time image receiving module (602), configured to receive real time dynamic image information transmitted from the second device according to the image capturing instruction transmitted from the capturing instruction transmitting module, the real time dynamic image information being image information captured by the second device using the camera;
a user instruction receiving module (603), configured to receive a shooting instruction input by a user;
a first file generating module (604), configured to generate a target file according to the shooting instruction received by the user instruction receiving module and the real time dynamic image information received by the real time image receiving module, the target file comprising a target image or a target video;
a first establishing module (605), configured to establish a wireless connection with the second device;
a control request transmitting module (606), configured to transmit a control request to the second device via the wireless connection established by the first establishing module; and
an identifier adding module (607), configured to add an identifier of the second device into a device table if an accept instruction fed back from the second device with respect to the control request transmitted by the control request transmitting module is received,
the capturing instruction transmitting module (601) comprises:
a selection receiving sub module (6011), configured to receive a selection instruction that is input by the user in the device table into which the identifier adding module adds; and
an instruction transmitting sub module (6012), configured to transmit the image capturing instruction to the second device indicated by the selection instruction received by the selection receiving sub module.

6. The system according to claim 5, wherein the first file generating module comprises:
a first capturing sub module (6041), configured to capture a current image indicated by the real time dynamic image information received by the real time image receiving module at the time when the user instruction receiving module receives a photo taking instruction; and
an image generating sub module (6042), configured to generate the target file according to the current image captured by the first capturing sub module, the target file being the target image.

7. The system according to claim 5, wherein the first file generating module comprises:
a second capturing sub module (6043), configured to configure, according to a video taking instruction received by the user instruction receiving module, a time receiving the video taking instruction as a start time and a time receiving a stop shooting instruction as a stop time, and continuously capture the real time dynamic image information from the start time until the stop time; and
a video generating sub module (6044), configured to generate the target file according to images indicated by the real time dynamic image information continuously captured by the second capturing sub module, the target file being the target video.

8. A system comprising a first device and a second device, the second device being a smart device including a camera, the second device comprising:
a capturing instruction receiving module (1101), configured to receive an image capturing instruction transmitted from the first device;
a real time image transmitting module (1102), configured to turn on the camera according to the image capturing instruction received by the capturing instruction receiving module, and transmit real time dynamic image information to the first device, the real time dynamic image information being image information captured by the second device using the camera;
a shooting instruction receiving module (1107), configured to receive a shooting instruction transmitted from the first device;
a second file generating module (1108), configured to generate a target file according to the shooting instruction received by the shooting instruction receiving module and the real time dynamic image information captured by the camera, the target file being a target image or a target video;
a second establishing module (1104), configured to establish a wireless connection with the first device;
a control request receiving module (1105), configured to receive a control request transmitted from the first device via the wireless connection established by the second establishing module;
an accept instruction feed back module (1106), configured to, if an accept instruction input by a user with respect to the control request received by the control request receiving module is received, feed back the accept instruction to the first device, the accept instruction being configured to instruct the first device to add an identifier of the second device into a device table; and
a status keeping module (1103), configured to keep a display status of a display screen of the second device as it was before receiving the image capturing instruction, when the image capturing instruction received by the capturing instruction receiving module is received.

## Patentansprüche

1. Verfahren zur Auslösungssteuerung, das Folgendes umfasst:
Einrichten (S401) einer drahtlosen Verbindung zwischen einer ersten Vorrichtung (A) und einer zweiten Vorrichtung (B), wobei die zweite Vorrichtung eine smarte Vorrichtung ist, die eine Kamera beinhaltet;
Übertragen (S402) über die drahtlose Verbindung, von der ersten Vorrichtung an die zweite Vorrichtung, einer Anfrage, die zweite Vorrichtung mit der ersten Vorrichtung zu steuern; und
falls ein von der zweiten Vorrichtung in Bezug auf die Steuerungsanfrage rückgemeldeter Annahmebefehl empfangen wird, Hinzufügen (S404) einer Kennung der zweiten Vorrichtung in eine Vorrichtungstabelle auf der ersten Vorrichtung,
Übertragen (S406), von der ersten Vorrichtung an die zweite Vorrichtung, eines Bildaufnahmebefehls, der konfiguriert ist, die zweite Vorrichtung anzuweisen, die Kamera einzuschalten (S407), wobei die zweite Vorrichtung gesteuert wird, einen Anzeigestatus eines Anzeigebildschirms der zweiten Vorrichtung so beizubehalten, wie er war, bevor der Bildaufnahmebefehl empfangen wurde; wobei das Übertragen von der ersten Vorrichtung an die zweite Vorrichtung eines Bildaufnahmebefehls weiter Folgendes umfasst:
Empfangen, durch die erste Vorrichtung, eines Auswahlbefehlseingangs in die Vorrichtungstabelle durch einen Anwender; und
Übertragen, von der ersten Vorrichtung, des Bildaufnahmebefehls an die zweite Vorrichtung, die von dem Auswahlbefehl angegeben wird;
Empfangen, durch die erste Vorrichtung, dynamischer Echtzeitbildinformationen, die von der zweiten Vorrichtung gemäß dem Bildaufnahmebefehl übertragen werden, wobei die dynamischen Echtzeitbildinformationen ein Bild definieren, das von der Kamera aufgenommen wird;
Empfangen (S409), durch die erste Vorrichtung, eines Auslösungsbefehlseingangs durch den Anwender; und
Erzeugen (S410), durch die erste Vorrichtung, einer Zieldatei gemäß dem Auslösungsbefehl und den dynamischen Echtzeitbildinformationen, wobei die Zieldatei ein Zielbild oder ein Zielvideo umfasst.

2. Verfahren zur Auslösungssteuerung nach Anspruch 1, wobei
wenn der Auslösungsbefehl ein Fotoaufnahmebefehl ist, das Erzeugen, durch die erste Vorrichtung, einer Zieldatei gemäß dem Auslösungsbefehl und den dynamischen Echtzeitbildinformationen Folgendes umfasst:
Aufnehmen eines aktuellen Bilds, das von den dynamischen Echtzeitbildinformationen angegeben wird, zu der Zeit, wenn die erste Vorrichtung den Fotoaufnahmebefehl empfängt; und
Erzeugen der Zieldatei gemäß dem aufgenommenen aktuellen Bild, wobei die Zieldatei das Zielbild ist.

3. Verfahren zur Auslösungssteuerung nach Anspruch 1, wobei
wenn der Auslösungsbefehl ein Videoaufnahmebefehl ist, das Erzeugen, durch die erste Vorrichtung, einer Zieldatei gemäß dem Auslösungsbefehl und der dynamischen Echtzeitbildinformationen Folgendes umfasst:
Konfigurieren, durch die erste Vorrichtung, einer Zeit vom Empfangen des Videoaufnahmebefehls als eine Startzeit und einer Zeit vom Empfangen eines Stoppauslösungsbefehls als eine Stoppzeit und fortlaufendes Aufnehmen der dynamischen Echtzeitbildinformationen von der Startzeit bis zu der Stoppzeit; und
Erzeugen der Zieldatei gemäß Bildern, die von den fortlaufend aufgenommenen dynamischen Echtzeitbildinformationen aufgenommen werden, wobei die Zieldatei das Zielvideo ist.

4. Verfahren zur Auslösungssteuerung, das Folgendes umfasst:
Einrichten einer drahtlosen Verbindung zwischen einer zweiten Vorrichtung und einer ersten Vorrichtung, wobei die zweite Vorrichtung eine smarte Vorrichtung ist, die eine Kamera beinhaltet;
Empfangen über die drahtlose Verbindung, durch die zweite Vorrichtung, einer Anfrage, die zweite Vorrichtung mit der ersten Vorrichtung zu steuern, die von der ersten Vorrichtung übertragen wird; und
falls ein Annahmebefehlseingang von einem Anwender in Bezug auf die Steuerungsanfrage empfangen wird, Rückmelden des Annahmebefehls an die erste Vorrichtung, wobei der Annahmebefehl konfiguriert ist, die erste Vorrichtung anzuweisen, eine Kennung der zweiten Vorrichtung in eine Vorrichtungstabelle der ersten Vorrichtung hinzuzufügen;
Empfangen (S201), durch die zweite Vorrichtung, eines Bildaufnahmebefehls, der von der ersten Vorrichtung übertragen wird;
Einschalten (S202) der Kamera gemäß dem Bildaufnahmebefehl und Übertragen von dynamischen Echtzeitbildinformationen an die erste Vorrichtung, durch die zweite Vorrichtung, wobei die dynamischen Echtzeitbildinformationen Bildinformationen sind, die von der zweiten Vorrichtung unter Verwendung der Kamera aufgenommen werden; und weiter Folgendes umfasst:
Erzeugen, durch die zweite Vorrichtung, einer Zieldatei gemäß dem Auslösungsbefehl und der dynamischen Echtzeitbildinformationen, die von der Kamera aufgenommen werden, wobei die Zieldatei ein Zielbild oder ein Zielvideo ist; und
wenn der Bildaufnahmebefehl von der zweiten Vorrichtung empfangen wird, Beibehalten eines Anzeigestatus eines Anzeigebildschirms der zweiten Vorrichtung so, wie er vor Empfangen des Bildaufnahmebefehls war.

5. System, das eine Vorrichtung zur Auslösungssteuerung umfasst, umfassend eine erste Vorrichtung und eine zweite Vorrichtung, wobei die erste Vorrichtung Folgendes umfasst:
ein Aufnahmebefehlsübertragungsmodul (601), das konfiguriert ist, einen Bildaufnahmebefehl an die zweite Vorrichtung zu übertragen, wobei der Bildaufnahmebefehl konfiguriert ist, die zweite Vorrichtung anzuweisen, eine Kamera einzuschalten, wobei die zweite Vorrichtung gesteuert wird, einen Anzeigestatus eines Anzeigebildschirms davon so beizubehalten, wie er vor Empfangen des Bildaufnahmebefehls war, wobei die zweite Vorrichtung eine smarte Vorrichtung ist, die die Kamera beinhaltet;
ein Echtzeitbildempfangsmodul (602), das konfiguriert ist, dynamische Echtzeitbildinformationen zu empfangen, die von der zweiten Vorrichtung gemäß dem Bildaufnahmebefehl übertragen werden, der von dem Aufnahmebefehlsübertragungsmodul übertragen wird, wobei die dynamischen Echtzeitbildinformationen Bildinformationen sind, die von der zweiten Vorrichtung unter Verwendung der Kamera aufgenommen werden;
ein Anwenderbefehlsempfangsmodul (603), das konfiguriert ist, einen Auslösungsbefehlseingang von einem Anwender zu empfangen;
ein erstes Dateierzeugungsmodul (604), das konfiguriert ist, eine Zieldatei gemäß dem Auslösungsbefehl, der von dem Anwenderbefehlsempfangsmodul empfangen wird, und den dynamischen Echtzeitbildinformationen, die von dem Echtzeitbildempfangsmodul empfangen werden, zu erzeugen, wobei die Zieldatei ein Zielbild oder ein Zielvideo umfasst;
ein erstes Einrichtungsmodul (605), das konfiguriert ist, eine drahtlose Verbindung mit der zweiten Vorrichtung einzurichten;
ein Steuerungsanfrageübertragungsmodul (606), das konfiguriert ist, eine Steuerungsanfrage an die zweite Vorrichtung über die drahtlose Verbindung zu übertragen, die von dem ersten Einrichtungsmodul eingerichtet wird; und
ein Kennungshinzufügungsmodul (607), das konfiguriert ist, eine Kennung der zweiten Vorrichtung in eine Vorrichtungstabelle hinzuzufügen, falls ein Annahmebefehl empfangen wird, der von der zweiten Vorrichtung in Bezug auf die Steuerungsanfrage zurückgemeldet wird, die von dem Steuerungsanfrageübertragungsmodul übertragen wird,
wobei das Aufnahmebefehlsübertragungsmodul (601) Folgendes umfasst:
ein Auswahlempfangsteilmodul (6011), das konfiguriert ist, einen Auswahlbefehl zu empfangen, der von dem Anwender in der Vorrichtungstabelle eingegeben wird, zu der das Kennungshinzufügungsmodul hinzufügt; und
ein Befehlsübertragungsteilmodul (6012), das konfiguriert ist, den Bildaufnahmebefehl an die zweite Vorrichtung zu übertragen, die von dem Auswahlbefehl angegeben wird, der von dem Auswahlempfangsteilmodul empfangen wird.

6. System nach Anspruch 5, wobei das erste Dateierzeugungsmodul Folgendes umfasst:
ein erstes Aufnahmeteilmodul (6041), das konfiguriert ist, ein aktuelles Bild, das von den dynamischen Echtzeitbildinformationen angegeben wird, die von dem Echzeitbildempfangsmodul empfangen werden, zu der Zeit aufzunehmen, wenn das Anwenderbefehlsempfangsmodul einen Fotoaufnahmebefehl empfängt; und
ein Bilderzeugungsteilmodul (6042), das konfiguriert ist, die Zieldatei gemäß dem aktuellen Bild zu erzeugen, das von dem ersten Aufnahmeteilmodul aufgenommen wird, wobei die Zieldatei das Zielbild ist.

7. System nach Anspruch 5, wobei das erste Dateierzeugungsmodul Folgendes umfasst:
ein zweites Aufnahmeteilmodul (6043), das konfiguriert ist, gemäß einem Videoaufnahmebefehl, der von dem Anwenderbefehlsempfangsmodul empfangen wird, eine Zeit vom Empfangen der Videoaufnahmebefehls als eine Startzeit und eine Zeit vom Empfangen eines Auslösungsbefehlsstopps als eine Stoppzeit zu konfigurieren und fortlaufend die dynamischen Echtzeitbildinformationen von der Startzeit bis zu der Stoppzeit aufzunehmen; und
ein Videoerzeugungsteilmodul (6044), das konfiguriert ist, die Zieldatei gemäß Bildern zu erzeugen, die von den dynamischen Echtzeitbildinformationen angegeben werden, die fortlaufend von dem zweiten Aufnahmeteilmodul aufgenommen werden, wobei die Zieldatei das Zielvideo ist.

8. System, umfassend eine erste Vorrichtung und eine zweite Vorrichtung, wobei die zweite Vorrichtung eine smarte Vorrichtung ist, die eine Kamera beinhaltet, wobei die zweite Vorrichtung Folgendes umfasst:
ein Aufnahmebefehlsempfangsmodul (1101), das konfiguriert ist, einen Bildaufnahmebefehl zu empfangen, der von der ersten Vorrichtung übertragen wird;
ein Echtzeitbildübertragungsmodul (1102), das konfiguriert ist, die Kamera gemäß dem Bildaufnahmebefehl einzuschalten, der von dem Aufnahmebefehlsempfangsmodul empfangen wird, und dynamische Echtzeitbildinformationen an die erste Vorrichtung zu übertragen, wobei die dynamischen Echtzeitbildinformationen Bildinformationen sind, die von der zweiten Vorrichtung unter Verwendung der Kamera aufgenommen werden;
ein Auslösungsbefehlsempfangsmodul (1107), das konfiguriert ist, einen Auslösungsbefehl zu empfangen, der von der ersten Vorrichtung übertragen wird;
ein zweites Dateierzeugungsmodul (1108), das konfiguriert ist, eine Zieldatei gemäß dem Auslösungsbefehl, der von dem Auslösungsbefehlsempfangsmodul empfangen wird, und den dynamischen Echtzeitbildinformationen, die von der Kamera aufgenommen werden, zu erzeugen, wobei die Zieldatei ein Zielbild oder ein Zielvideo ist;
ein zweites Einrichtungsmodul (1104), das konfiguriert ist, eine drahtlose Verbindung mit der ersten Vorrichtung einzurichten;
ein Steuerungsanfrageempfangsmodul (1105), das konfiguriert ist, eine Steuerungsanfrage zu empfangen, die von der ersten Vorrichtung über die drahtlose Verbindung übertragen wird, die von dem zweiten Einrichtungsmodul eingerichtet wird;
ein Annahmebefehlsrückmeldungsmodul (1106), das konfiguriert ist, falls ein Annahmebefehlseingang von einem Anwender in Bezug auf die Steuerungsanfrage empfangen wird, die von dem Steuerungsanfrageempfangsmodul empfangen wird, den Annahmebefehl an die erste Vorrichtung zurückzumelden, wobei der Annahmebefehl konfiguriert ist, die erste Vorrichtung anzuweisen, eine Kennung der zweiten Vorrichtung in eine Vorrichtungstabelle hinzuzufügen; und
ein Statuserhaltungsmodul (1103), das konfiguriert ist, einen Anzeigestatus eines Anzeigebildschirms der zweiten Vorrichtung so beizubehalten, wie er vor Empfangen des Bildaufnahmebefehls war, wenn der Bildaufnahmebefehl, der von dem Aufnahmebefehlsempfangsmodul empfangen wird, empfangen wird.

## Revendications

1. Procédé de commande de prise de vue, comprenant les étapes consistant à :
établir (S401) une connexion sans fil entre un premier dispositif (A) et un second dispositif (B), le second dispositif étant un dispositif intelligent incluant une caméra ;
transmettre (S402) via la connexion sans fil, du premier dispositif au second dispositif, une demande pour commander le second dispositif à l'aide du premier dispositif ; et
si une instruction d'acceptation renvoyée par le second dispositif par rapport à la demande de commande est reçue, ajouter (S404) un identifiant du second dispositif dans une table de dispositifs sur le premier dispositif,
transmettre (S406), du premier dispositif au second dispositif, une instruction de capture d'image qui est configurée pour donner comme instruction au second dispositif d'allumer la caméra (S407), le second dispositif étant commandé pour conserver un état d'affichage d'un écran d'affichage du second dispositif tel qu'il était avant de recevoir l'instruction de capture d'image; la transmission du premier dispositif au second dispositif d'une instruction de capture d'image comprenant en outre :
une réception, par le premier dispositif, d'une instruction de sélection entrée dans la table de dispositifs par un utilisateur ; et
une transmission, à partir du premier dispositif, de l'instruction de capture d'image au second dispositif indiqué par l'instruction de sélection,
recevoir, par l'intermédiaire du premier dispositif, des informations d'image dynamique en temps réel transmises à partir du second dispositif selon l'instruction de capture d'image, les informations d'image dynamique en temps réel définissant une image capturée par la caméra ;
recevoir (S409), par l'intermédiaire du premier dispositif, une instruction de prise de vue entrée par l'utilisateur ; et
générer (S410), par l'intermédiaire du premier dispositif, un fichier cible en fonction de l'instruction de prise de vue et des informations d'image dynamique en temps réel, le fichier cible comprenant une image cible ou une vidéo cible.

2. Procédé de commande de prise de vue selon la revendication 1, dans lequel,
lorsque l'instruction de prise de vue est une instruction de prise de photographie, la génération, par l'intermédiaire du premier dispositif, d'un fichier cible en fonction de l'instruction de prise de vue et des informations d'image dynamique en temps réel comprend :
une capture d'une image actuelle indiquée par les informations d'image dynamique en temps réel au moment où le premier dispositif reçoit l'instruction de prise de photographie ; et
une génération d'un fichier cible en fonction de l'image actuelle capturée, le fichier cible étant l'image cible.

3. Procédé de commande de prise de vue selon la revendication 1, dans lequel,
lorsque l'instruction de prise de vue est une instruction de prise de vidéo, la génération, par l'intermédiaire du premier dispositif, d'un fichier cible en fonction de l'instruction de prise de vue et des informations d'image dynamique en temps réel comprend :
une configuration, par l'intermédiaire du premier dispositif, d'un temps de réception de l'instruction de prise de vidéo en tant que temps de début et d'un temps de réception d'une instruction d'arrêt de prise de vue en tant que temps d'arrêt, et une capture en continu des informations d'image dynamique en temps réel à partir du temps de début jusqu'au temps d'arrêt ; et
une génération d'un fichier cible en fonction d'images indiquées par les informations d'image dynamique en temps réel capturées en continu, le fichier cible étant la vidéo cible.

4. Procédé de commande de prise de vue, comprenant les étapes consistant à :
établir une connexion sans fil entre un second dispositif et un premier dispositif, le second dispositif étant un dispositif intelligent incluant une caméra ;
recevoir via la connexion sans fil, par l'intermédiaire du second dispositif, une demande pour commander le second dispositif à l'aide du premier dispositif via la connexion sans fil transmise à partir du premier dispositif ; et
si une instruction d'acceptation entrée par un utilisateur par rapport à la demande de commande est reçue, renvoyer l'instruction d'acceptation au premier dispositif, l'instruction d'acceptation étant configurée pour donner comme instruction au premier dispositif d'ajouter un identifiant du second dispositif dans une table de dispositifs au premier dispositif ;
recevoir (S201), par l'intermédiaire du second dispositif, une instruction de capture d'image transmise à partir du premier dispositif ;
allumer (S202) la caméra selon l'instruction de capture d'image, et transmettre des informations d'image dynamique en temps réel au premier dispositif, par l'intermédiaire du second dispositif, les informations d'image dynamique en temps réel étant des informations d'image capturées par le second dispositif en utilisant la caméra ; et comprenant en outre les étapes consistant à :
générer, par l'intermédiaire du second dispositif, un fichier cible en fonction de l'instruction de prise de vue et des informations d'image dynamique en temps réel capturées par la caméra, le fichier cible étant une image cible ou une vidéo cible ; et
lorsque l'instruction de capture d'image est reçue par le second dispositif, conserver un état d'affichage d'un écran d'affichage du second dispositif tel qu'il était avant de recevoir l'instruction de capture d'image.

5. Système comprenant un dispositif de commande de prise de vue comprenant un premier dispositif et un second dispositif, dans lequel le premier dispositif comprend :
un module de transmission d'instruction de capture (601), configuré pour transmettre une instruction de capture d'image au second dispositif, l'instruction de capture d'image étant configurée pour donner comme instruction au second dispositif d'allumer une caméra, le second dispositif étant commandé pour conserver un état d'affichage d'un écran d'affichage de celui-ci tel qu'il était avant de recevoir l'instruction de capture d'image, le second dispositif étant un dispositif intelligent incluant la caméra ;
un module de réception d'image en temps réel (602), configuré pour recevoir des informations d'image dynamique en temps réel transmises à partir du second dispositif conformément à l'instruction de capture d'image transmise à partir du module de transmission d'instruction de capture, les informations d'image dynamique en temps réel étant des informations d'image capturées par le second dispositif à l'aide de la caméra ;
un module de réception d'instruction d'utilisateur (603), configuré pour recevoir une instruction de prise de vue entrée par un utilisateur ;
un premier module de génération de fichier (604), configuré pour générer un fichier cible selon l'instruction de prise de vue reçue par le module de réception d'instruction d'utilisateur et les informations d'image dynamique en temps réel reçues par le module de réception d'image en temps réel, le fichier cible comprenant une image cible ou une vidéo cible ;
un premier module d'établissement (605), configuré pour établir une connexion sans fil avec le second dispositif ;
un module de transmission de demande de commande (606), configuré pour transmettre une demande de commande au second dispositif via la connexion sans fil établie par le premier module d'établissement ; et
un module d'ajout d'identifiant (607), configuré pour ajouter un identifiant du second dispositif dans une table de dispositifs si une instruction d'acceptation renvoyée par le second dispositif par rapport à la demande de commande transmise par le module de transmission de demande de commande est reçue,
le module de transmission d'instructions de capture (601) comprend :
un sous-module de réception de sélection (6011), configuré pour recevoir une instruction de sélection qui est entrée par l'utilisateur dans la table de dispositifs dans laquelle le module d'ajout d'identifiant ajoute ; et
un sous-module de transmission d'instruction (6012), configuré pour transmettre l'instruction de capture d'image au second dispositif indiqué par l'instruction de sélection reçue par le sous-module de réception de sélection.

6. Système selon la revendication 5, dans lequel le premier module de génération de fichier comprend :
un premier sous-module de capture (6041), configuré pour capturer une image actuelle indiquée par les informations d'image dynamique en temps réel reçues par le module de réception d'image en temps réel au moment où le module de réception d'instruction d'utilisateur reçoit une instruction de prise de photographie ; et
un sous-module de génération d'image (6042), configuré pour générer le fichier cible selon l'image actuelle capturée par le premier sous-module de capture, le fichier cible étant l'image cible.

7. Système selon la revendication 5, dans lequel le premier module de génération de fichier comprend :
un second sous-module de capture (6043), configuré pour configurer, en fonction d'une instruction de prise de vidéo reçue par le module de réception d'instruction d'utilisateur, un temps de réception de l'instruction de prise de vidéo en tant que temps de début et un temps de réception d'une instruction d'arrêt de prise de vue en tant que temps d'arrêt, et capturer en continu les informations d'image dynamique en temps réel à partir du temps de début jusqu'au temps d'arrêt ; et
un sous-module de génération vidéo (6044), configuré pour générer le fichier cible selon des images indiquées par les informations d'image dynamique en temps réel capturées en continu par le second sous-module de capture, le fichier cible étant la vidéo cible.

8. Système comprenant un premier dispositif et un second dispositif, le second dispositif étant un dispositif intelligent incluant une caméra, le second dispositif comprenant :
un module de réception d'instruction de capture (1101), configuré pour recevoir une instruction de capture d'image transmise à partir du premier dispositif ;
un module de transmission d'image en temps réel (1102), configuré pour allumer la caméra selon l'instruction de capture d'image reçue par le module de réception d'instruction de capture, et transmettre des informations d'image dynamique en temps réel au premier dispositif, les informations d'image dynamique en temps réel étant des informations d'image capturées par le second dispositif en utilisant la caméra ;
un module de réception d'instruction de prise de vue (1107), configuré pour recevoir une instruction de prise de vue transmise à partir du premier dispositif ;
un second module de génération de fichier (1108), configuré pour générer un fichier cible selon l'instruction de prise de vue reçue par le module de réception d'instruction de prise de vue et les informations d'image dynamique en temps réel capturées par la caméra, le fichier cible étant une image cible ou une vidéo cible ;
un second module d'établissement (1104), configuré pour établir une connexion sans fil avec le premier dispositif ;
un module de réception de demande de commande (1105), configuré pour recevoir une demande de commande transmise à partir du premier dispositif via la connexion sans fil établie par le second module d'établissement ;
un module de renvoi d'instruction d'acceptation (1106), configuré pour, si une instruction d'acceptation entrée par un utilisateur par rapport à la demande de commande reçue par le module de réception de demande de commande est reçue, renvoyer l'instruction d'acceptation au premier dispositif, l'instruction d'acceptation étant configurée pour donner comme instruction au premier dispositif d'ajouter un identifiant du second dispositif dans une table de dispositifs ; et
un module de conservation d'état (1103), configuré pour conserver un état d'affichage d'un écran d'affichage du second dispositif tel qu'il était avant de recevoir l'instruction de capture d'image, lorsque l'instruction de capture d'image reçue par le module de réception d'instruction de capture est reçue.
